# EUROPEAN PATENT APPLICATION

(11) **EP 3 716 370 A1**
(43) Date of publication of application: **30.09.2020**
(21) Application number: 18878234.6
(22) Date of filing: 03.01.2018
(51) Int. Cl.: H01M 4/36, H01M 4/485, H01M 4/505, H01M 4/525, H01M 10/0525, H01M 10/058

(54) **LITHIUM-RICH OXIDE POSITIVE ELECTRODE MATERIAL, PREPARATION METHOD THEREFOR, AND LITHIUM ION BATTERY**

(30) Priority: 20.11.2017 CN 201711158982
(71) Applicant: Ningbo Institute of Materials Technology and Engineering, Chinese Academy of Sciences, Ningbo, Zhejiang 315201 (CN)
(72) Inventor: QIU, Bao, Ningbo Zhejiang 315201 (CN); XIA, Yonggao, Ningbo Zhejiang 315201 (CN); LIU, Zhaoping, Ningbo Zhejiang 315201 (CN)
(74) Representative: Agasse, Stéphane
(86) International application number: PCT/CN2018/070091
(87) International publication number: WO 2019/095530

(57) **Abstract**

A lithium-rich oxide positive electrode material. At least one unit lattice parameter (a, b, c) of the material decreases as the temperature increases at a temperature between 50 to 350 degrees. After treatment for 0.5 to 10 hours under the condition of 150 to 350°C, the degree of ordering of the material structure is increased, and the material has a higher discharge specific capacity and a higher discharge voltage when applied to a positive electrode of a lithium ion battery.

## Description

### CROSS REFERENCE TO RELATED APPLICATIONS

This application claims the priority of Chinese Patent Application No. 201711158982.7, filed on November 20, 2017, and titled with "LITHIUM-RICH OXIDE POSITIVE ELECTRODE MATERIAL, PREPARATION METHOD THEREFOR, AND LITHIUM ION BATTERY", and the disclosures of which are hereby incorporated by reference.

### FIELD

The present disclosure relates to the field of lithium ion battery technology, specifically to a lithium-rich oxide positive electrode material, a method for preparing the same, and a lithium ion battery.

### BACKGROUND

At present, lithium-ion batteries are considered to be the most promising batteries for automotive power batteries. The actual energy density of the conventional lithium-ion batteries is 150-200Wh/kg, far lower than 300Wh/kg. Therefore, in order to increase the cruising range of electric vehicles, research and development of a new generation of high-energy-density power lithium batteries is now an urgent problem to be solved. In the past 20 years, people have made a lot of efforts to increase the energy density of lithium ion batteries, but very little effect has been produced, which is mainly because the discharge specific capacity of the conventional positive electrode materials is usually less than 200mAh/g. Therefore, exploring and designing new high-capacity oxide positive electrode materials is the key to break the bottleneck of the conventional battery energy density. The oxide positive electrode materials currently used only utilize the reversible redox of transition metal cations to achieve charge compensation during charge and discharge. Due to the limitation of reversible capacity in thermodynamic theory, these oxide positive electrode materials cannot achieve higher discharge specific capacity.

Recently, it is found that many lithium-rich positive electrode materials are able to utilize the electrochemical activity of anions (lattice oxygen) while utilizing the reversible redox of transition metal cations, resulting in more Li ions de-intercalating, thereby achieving over 300mAh/g of a discharge specific capacity. So far, people's research interests mainly focus on the original structure of these lithium-rich materials. The Chinese patent No. CN101080830A published by Thackeray et al. of the Argonne National Laboratory of the United States clearly indicates that the lithium-rich positive electrode material has a superlattice peak at 21-23° (Cu target). In addition, Ceder et al. point out in a non-patent literature Nature Chemistry, 8, 692 (2016) that in the microstructure of these lithium-rich positive electrode materials, there is a local structure with a Li-O-Li configuration. These local structures are capable of inducing lattice oxygen to have two different 2p hybrid orbitals, thereby generating electrochemical activity, resulting in more available Li ions. Recently, we also find in the non-patent literature Chemistry of Materials, 29, 908 (2017) that the Li/O ratio in the transition metal oxide positive electrode material is a key factor determining the electrochemical activity of the lattice oxygen. As the Li/O ratio increases, the local environment of the lattice oxygen changes significantly and induces electrochemical activity of the lattice oxygen. In general, the high capacity of lithium-rich positive electrode materials is due to the reversible participation of lattice oxygen in the redox process, resulting in more Li ions de-intercalating. The production of electrochemical activity of the lattice oxygen in the lithium-rich positive electrode material is due to the particularity of its Li-O-Li local structure, which provides an additional electrochemical redox center to produce a higher discharge specific capacity.

The electrochemical activity of the lattice oxygen allows the first discharge specific capacity of the material to exceed 300mAh/g, and also exhibit an extremely high discharge specific capacity in the subsequent cycles. This indicates that the electrochemical activity of the lattice oxygen exists in the subsequent cycles. However, the charge-discharge curves of these materials in the subsequent cycle are completely different from the first charge-discharge curves, indicating that the local structural basis in which the lattice oxygen electrochemical activity exists in the subsequent cycles is totally different from the related theories proposed at present. After the first electrochemical activation cycle, due to the complexity of the material structure, this problem has not attracted people's attention so far. In summary, although the electrochemical activity of lattice oxygen is always present in the subsequent cycles, the local structural basis in which it exists in different material systems is completely different from that in the first cycle, so that relevant electrochemical performance during the cycle is not well understood. As far as the current research situation is concerned, due to its special redox active center, lithium-rich positive electrode materials have the technical problems of low coulombic efficiency, poor rate performance and poor cycleability, which hinder its use in large-scale. Therefore, revealing the crystal structure of the lithium-rich positive electrode material after circulation is important for solving these problems.

### SUMMARY

In view of this, the technical problem to be solved in the present disclosure is to provide a lithium-rich oxide positive electrode material, a method for preparing the same, and a lithium ion battery. Basing on the structure features of the positive electrode material, a modified method is further provided to give the positive electrode material of lithium-ion battery lower defect density, so as to improve ordering level of the material structure, and give the positive electrode material of lithium-ion battery higher discharge specific capacity and higher discharge voltage.

Compared with the conventional technology, the present disclosure provides a lithium-rich oxide positive electrode material, wherein when the material is subjected to X-ray diffraction analysis at a temperature between 50°C and 350°C, at least one lattice parameter (a, b, c) decreases as the temperature increases.

Therein, the lithium-rich oxide positive material has a general formula of Li₁₊ₓNi_{y}Co_{z}MnᵤM_{d}O₂, wherein 0<x≤0.2; 0≤y≤0.35; 0≤z≤0.35; 0.5≤u≤0.9; 0≤d≤0.5; and M is one or more selected from nickel, cobalt, manganese, iron, aluminum, vanadium, titanium, zirconium, tin, niobium, molybdenum, ruthenium and the like.

The lithium-rich oxide has a crystal structure selected from layered structure, spinel structure, molten salt structure and monoclinic layered structure.

When M is one or more selected from nickel, cobalt and manganese, the crystal structure is layered structure;
when M is one or more selected from iron, aluminum, vanadium, titanium, zirconium, niobium and molybdenum, the crystal structure is spinel structure or molten salt structure; and
when M is one or more selected from titanium, zirconium, tin and ruthenium, the crystal structure is monoclinic layered structure.

The present disclosure further provides a method for preparing the above lithium-rich oxide positive electrode material, comprising
charging the material at electric potential of 4.5-4.8V vs. Li⁰, and discharging to 2.0-4.4V to conduct an electrochemical treatment. Preferably, the current density in the electrochemical treatment is 25-250mA/g, preferably 25mA/g.

When the lithium-rich oxide positive electrode material after electrochemical treatment is subjected to X-ray diffraction analysis at a temperature between 50°C and 350°C, at least one lattice parameter (a, b, c) decreases as the temperature increases.

The lithium-rich oxide positive material has a general formula of Li₁₊ₓNi_{y}Co_{z}MnᵤM_{d}O₂, wherein 0<x≤0.2; 0≤y≤0.35; 0≤z≤0.35; 0.5≤u≤0.9; 0≤d≤0.5; and M is one or more selected from nickel, cobalt, manganese, iron, aluminum, vanadium, titanium, zirconium, tin, niobium, molybdenum, ruthenium and the like.

Preferably, and the lithium-rich oxide has a crystal structure selected from layered structure, spinel structure, molten salt structure, monoclinic layered structure.

When the crystal structure is layered structure, after charging the material in a high voltage area of 4.6-4.8V vs. Li to electrochemically activate the material, the material is discharged to 2.0-3.2V The lectrode material after circulation is subjected to X-ray diffraction analysis at different temperatures using an X-ray diffractometer of German Bruker Corporation or a synchrotron light source. The temperature range of the analysis is 20-400°C, preferably 50-350°C. At the same time, the lattice parameters of the material are refined by corresponding crystal structure refining software such as Full proof and the like, and the lattice parameters (a, b and c) thereof decrease as the temperature increases.

When M is one or more selected from nickel, cobalt and manganese, the crystal structure is layered structure, and the method of electrochemical treatment is:
charging the lithium-rich oxide positive electrode material with a layered structure at electrical potential of 4.6-4.8V vs. Li⁰, and discharging to 2.0-3.2V; the cycle number of the electrochemical treatment is 1-300 times.

In some specific embodiments, the method of electrochemical treatment is:
charging the lithium-rich oxide positive electrode material with a layered structure at 4.6V vs. Li⁰, and discharging to 2.0V; the cycle number of the electrochemical treatment is 1-300 times. The lithium-rich oxide positive electrode material after treatment is subjected to X-ray diffraction analysis at a temperature between 50°C and 350°C, wherein at a temperature between 100°C and 350°C, at least one of the lattice parameters a=b, and c decreases as the temperature increases, but no obvious change is observed in the obtained X-ray diffraction spectrum.

In some specific embodiments, the method of electrochemical treatment is:
charging the lithium-rich oxide positive electrode material with a layered structure at 4.8V vs. Li⁰, and discharging to 2.0V; the cycle number of the electrochemical treatment is 1-300 times. The lithium-rich oxide positive electrode material after treatment is subjected to X-ray diffraction analysis at a temperature between 50°C and 350°C, wherein at a temperature between 100°C and 350°C, at least one of the lattice parameters a=b, and c decreases as the temperature increases, but no obvious change is observed in the obtained X-ray diffraction spectrum.

In some specific embodiments, the method of electrochemical treatment is:
charging the lithium-rich oxide positive electrode material with a layered structure at 4.8V vs. Li⁰, and discharging to 3.2V; the cycle number of the electrochemical treatment is 1-300 times. The lithium-rich oxide positive electrode material after treatment is subjected to X-ray diffraction analysis at a temperature between 50°C and 350°C, wherein at a temperature between 100°C and 350°C, at least one of the lattice parameters a=b, and c decreases as the temperature increases, but no obvious change is observed in the obtained X-ray diffraction spectrum.

In some specific embodiments, the method of electrochemical treatment is:
charging the lithium-rich oxide positive electrode material with a layered structure at 4.8V vs. Li⁰, discharging to 2.0V, and subjecting the material to 1-300 cycles, and then charging the lithium-rich oxide positive electrode material with a layered structure at 4.6V vs. Li⁰, discharging to 2.0V, and subjecting the material to 1-300 cycles. The lithium-rich oxide positive electrode material after electrochemical treatment is subjected to X-ray diffraction analysis at a temperature between 50°C and 350°C, wherein at a temperature between 100°C and 350°C, at least one of the lattice parameters a=b, and c decreases as the temperature increases, but no obvious change is observed in the obtained X-ray diffraction spectrum.

When the crystal structure is spinel or rock salt structure, after charging the material in a high voltage area of 4.6-4.8V vs. Li to electrochemically activate the material, the material is discharged to 2.0V. The electrode material after circulation is then subjected to X-ray diffraction analysis at different temperatures using an X-ray diffractometer of German Bruker Corporation or a synchrotron light source. The temperature range of the analysis is 20-400°C, preferably 50-350°C. At the same time, the lattice parameters of the material are refined by corresponding crystal structure refining software such as Full proof and the like, and the lattice parameters (a, b and c) thereof decrease as the temperature increases.

When M is one or more selected from iron, aluminum, vanadium, titanium, zirconium, niobium and molybdenum, the crystal structure is spinel structure or molten salt structure, and the method of electrochemical treatment is:
charging the lithium-rich oxide positive electrode material with a spinel structure or molten salt structure at electrical potential of 4.6-4.8V vs. Li⁰, and discharging to 2.0-3.0V; the cycle number of the electrochemical treatment is 1-300 times.

In some specific embodiments, the method of electrochemical treatment is:
charging the lithium-rich oxide positive electrode material with a spinel structure or molten salt structure at 4.8V vs. Li⁰, and discharging to 2.0V; the cycle number of the electrochemical treatment is 1-300 times. The lithium-rich oxide positive electrode material after treatment is subjected to X-ray diffraction analysis at a temperature between 50°C and 350°C, wherein at a temperature between 100°C and 350°C, at least one of the lattice parameters a=b, and c decreases as the temperature increases, but no obvious change is observed in the obtained X-ray diffraction spectrum.

When the crystal structure is monoclinic layered structure, after charging the material in a high voltage area of 4.6-4.8V vs. Li to electrochemically activate the material, the material is discharged to 2.0V The electrode material after circulation is then subjected to X-ray diffraction analysis at different temperatures using an X-ray diffractometer of German Bruker Corporation or a synchrotron light source. The temperature range of the analysis is 20-400°C, preferably 50-350°C. At the same time, the lattice parameters of the material are refined by corresponding crystal structure refining software such as Full proof and the like, and at a temperature between 50°C and 350°C at least one of the lattice parameters (a, b and c) thereof decreases as the temperature increases.

When M is one or more selected from titanium, zirconium, tin, molybdenum and ruthenium, the crystal structure is monoclinic layered structure, and the method of electrochemical treatment is:
charging the lithium-rich oxide positive electrode material with a monoclinic layered structure at electrical potential of 4.6-4.8V vs. Li⁰, and discharging to 2.0-4.4V; the cycle number of the electrochemical treatment is 1-300 times.

In some specific embodiments, the method of electrochemical treatment is:
charging the lithium-rich oxide positive electrode material with a monoclinic layered structure at 4.8V vs. Li⁰, and discharging to 2.0V; the cycle number of the electrochemical treatment is 1-300 times. The lithium-rich oxide positive electrode material after treatment is subjected to X-ray diffraction analysis at a temperature between 50°C and 350°C, wherein at a temperature between 100°C and 350°C, at least one of the lattice parameters a=b, and c decreases as the temperature increases, but no obvious change is observed in the obtained X-ray diffraction spectrum. Preferably, at a temperature between 100°C and 350°C, at least one of the lattice parameter c decreases as the temperature increases, but no obvious change is observed in the obtained X-ray diffraction spectrum.

In some specific embodiments, the method of electrochemical treatment is:
charging the lithium-rich oxide positive electrode material with a monoclinic layered structure at 4.6V vs. Li⁰, and discharging to 2.0V; the cycle number of the electrochemical treatment is 1-300 times. The lithium-rich oxide positive electrode material after treatment is subjected to X-ray diffraction analysis at a temperature between 50°C and 350°C, wherein, at a temperature between 100°C and 350°C, at least one of the lattice parameters a=b, and c decreases as the temperature increases, but no obvious change is observed in the obtained X-ray diffraction spectrum. Preferably, at a temperature between 100°C and 350°C, at least one of the lattice parameter c decreases as the temperature increases, but no obvious change is observed in the obtained X-ray diffraction spectrum.

In the present disclosure, after subjecting the lithium-rich oxide positive electrode material to electrochemical treatment, the method further comprises conducting a thermal treatment, and the method of thermal treatment is: treating the lithium-rich oxide positive electrode material after electrochemical treatment under conditions of 150-350 °C for 0.5-10 h. Compared with the lithium-rich oxide positive electrode material without thermal treatment, the positive electrode material after thermal treatment has lower defect density, and has higher discharge specific capacity and discharge voltage when being used in lithium-ion battery.

In some specific embodiments, the temperature of the thermal treatment is 200-300 °C, and the time of the thermal treatment is 1-5 h.

The present disclosure further provides a lithium-ion battery, comprising, a positive electrode, a negative electrode, a membrane and an electrolyte solution, wherein the positive electrode is made of the lithium-rich oxide positive electrode material prepared by the above method.

Therein, the negative electrode is selected from metal lithium, lithium titanate or graphite. The membrane is selected from Cegard series. The electrolyte solution is selected from 1mol/L LiPF₆ in EC: DMC=3:7.

The method provided in the present disclosure is used to analyze the structure features of the positive electrode material, thereby providing a modified method to give the positive electrode material of the lithium-ion battery lower defect density, so as to improve the structure ordering level of the material, and give the positive electrode material of the lithium-ion battery a higher discharge specific capacity and a higher discharge voltage.

### BRIEF DESCRIPTION OF DRAWINGS

Figure 1 shows the change of the lattice parameters of the lithium-rich positive electrode material with a layered structure prepared in Example 1 without electrochemical treatment as the temperature changes.
Figure 2 shows the change of the lattice parameters of the electrode material as the temperature changes after the lithium-rich positive electrode material Li_{1.14}Ni_{0.136}Co_{0.136}Mn_{0.544}O₂ with a layered structure prepared in Example 1 is charged to 4.8V and discharged to 2.0V once.
Figure 3 shows the change of the lattice parameters of the electrode material as the temperature changes after the lithium-rich positive electrode material Li_{1.14}Ni_{0.136}Co_{0.136}Mn_{0.544}O₂ with a layered structure prepared in Example 1 is charged to 4.8V and discharged to 2.0V for 100 times.
Figure 4 shows the change of the lattice parameters of the electrode material as the temperature changes after the lithium-rich positive electrode material Li_{1.14}Ni_{0.136}Co_{0.136}Mn_{0.544}O₂ with a layered structure prepared in Example 1 is charged to 4.8V and discharged to 2.0V for 300 times.
Figure 5 is the charge-discharge curve figure of the lithium-rich positive electrode material Li_{1.14}Ni_{0.136}Co_{0.136}Mn_{0.544}O₂ with a layered structure prepared in Example 1 without thermal treatment or being treated at 200°C for 2h after charged to 4.8V and discharged to 2.0V once,.
Figure 6 is the charge-discharge curve figure of the lithium-rich positive electrode material Li_{1.14}Ni_{0.136}Co_{0.136}Mn_{0.544}O₂ with a layered structure prepared in Example 1 without thermal treatment or being treated at 250°C for 5h after charged to 4.8V and discharged to 2.0V once.
Figure 7 is the charge-discharge curve figure of the lithium-rich positive electrode material Li_{1.14}Ni_{0.136}Co_{0.136}Mn_{0.544}O₂ with a layered structure prepared in Example 1 without thermal treatment or being treated at 300°C for 1h after charged to 4.8V and discharged to 2.0V once.
Figure 8 shows the change of the lattice parameters of the electrode material as the temperature changes after the lithium-rich positive electrode material Li_{1.2}Mn_{0.4}Ti_{0.4}O₂ is charged to 4.8V and discharged to 2.0V for the first time.
Figure 9 shows the change of the lattice parameters of the electrode material as the temperature changes after the lithium-rich positive electrode material Li₂Ru_{0.5}Ti_{0.5}O₃ is charged to 4.6V and discharged to 2.0V for the first time.

### DETAILED DESCRIPTION

For further understanding the present disclosure, the lithium-rich oxide positive electrode material, the method for preparing the same and the lithium-ion battery provided in the present disclosure will be illustrated in conjunction with embodiments hereinafter. The scope of protection of the present disclosure is not limited by the following embodiments.

### Example 1

1) Nickel acetate, cobalt acetate, manganese acetate were mixed at a molar ratio of nickel element, cobalt element and manganese element = 1: 1: 4, and mixed and stirred for 5h. The precipitation were dried, to give the precursor (Ni_{1/6}Co_{1/6}Mn_{4/6})CO₃.
2) The precursor (Ni_{1/6}Co_{1/6}Mn_{4/6})CO₃ obtained in Step 1) and lithium carbonate at a molar ratio of 1: 0.7 were subjected to thermal treatment at 850°C for 24h, cooled to room temperature, and milled to give a lithium-rich positive electrode material Li_{1.14}Ni_{0.136}Co_{0.136}Mn_{0.544}O₂.
3) The above lithium-rich positive electrode material with a layered structure was subjected to electrochemical treatment. The specific treatment was: 8g the above lithium-rich positive electrode with a layered structure, 1g acetylene black, 1g polyvinylidene fluoride and 30g N-methyl pyrrolidone were mixed at normal temperature and normal pressure to form slurry, and the slurry was evenly coated on the aluminum foil to give the pole piece. The obtained pole piece was dried at 80°C and pressed tightly. The pole piece was cut into 1.32cm² round slices as the positive electrode, and metal lithium slice was used as the negative electrode. 1mol/L LiPF₆ ethylene carbonate (EC) and dimethyl carbonate (DMC) solution was used as the electrolyte solution, wherein the volume ratio of EC and DMC was 1: 1. In a glove box full of argon, a button cell was assembled. The obtained half-cell was subjected to a cycle performance test with an electrochemical tester. The test temperature was 25°C, the charge cut-off voltage was 4.8V vs. Li⁺/Li⁰, and the discharge cut-off voltage was 2.0V vs. Li⁺/Li⁰. 1-300 cycles were carried out.
4) The lithium-rich positive electrode material with a layered structure was subjected to X-ray diffraction analysis at different temperatures using an X-ray diffractometer of German Bruker Corporation or a synchrotron light source. The test conditions were: light source: Cu-Ka ray, Cu target, tube pressure: 40V, tube current: 40mA, scanning speed: 2°/min, 2θ scan range: 15-90°, step length: 0.02°, divergence slit (DS): 1mm, anti-scatter slit (SS): 8mm, graphite monochromator; or synchrotron radiation source, and the temperature range of test: 20°C-400°C.

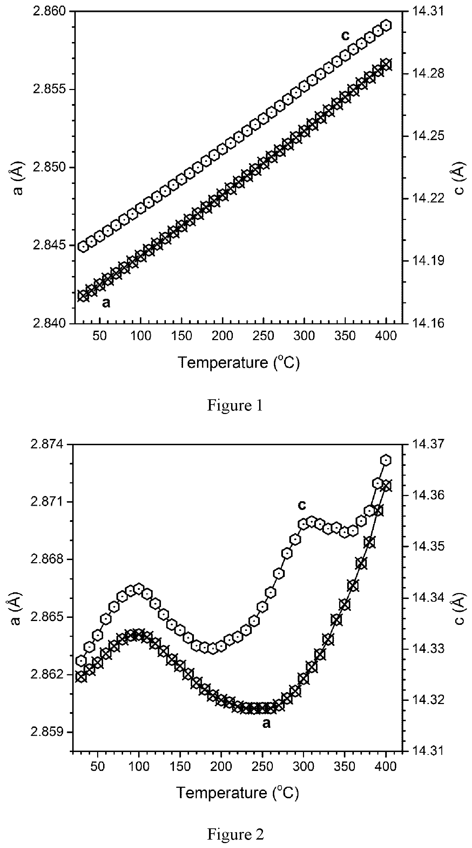

   Figure 1 shows the change of the lattice parameters of the lithium-rich positive electrode material with a layered structure without electrochemical treatment as the temperature changes. It can be obviously concluded from the figure that the lattice parameters a=b, and c linearly increase as the temperature increases. This is due to the thermal expansion effect of material, and is in line with the results of the report about LiNi_{0.5}Mn_{0.5}O₂ layered material in Yang Shao-Horn et al., Chemistry of Materials, 20, 4936-4951 (2008*).*
   Figure 2 shows the change of the lattice parameters of the electrode material as the temperature changes after the lithium-rich positive electrode material Li_{1.14}Ni_{0.136}Co_{0.136}Mn_{0.544}O₂ with a layered structure is charged to 4.8V and discharged to 2.0V once. It can be concluded from the figure that at a temperature between room temperature and 100°C, all of the lattice parameters a=b, and c increase as the temperature increases. This is due to the thermal expansion effect of material, and the result is similar to the change of the original material. As the temperature continuously increases, at a temperature between 100°C and 350°C, the lattice parameters a=b decrease as the temperature increases at 100-250°C. The lattice parameter c decreases as the temperature increases at 100-190°C and 300-350°C.

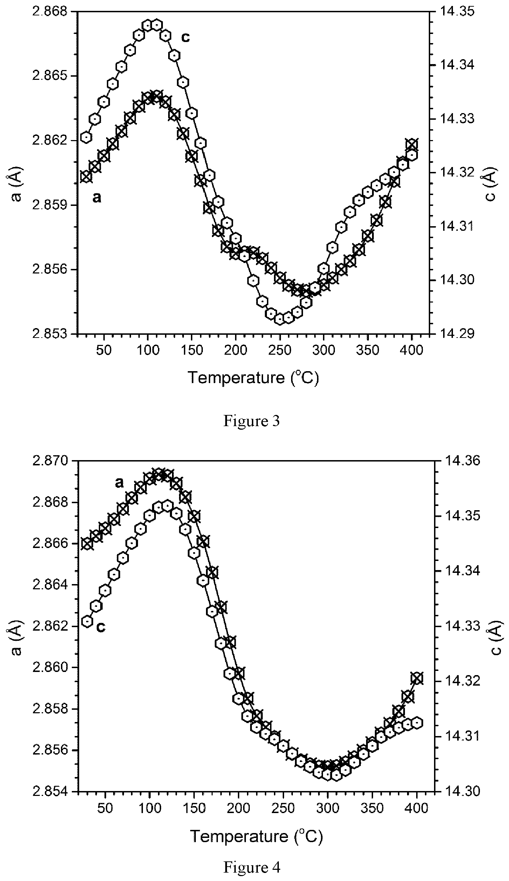

   Figure 3 shows the change of the lattice parameters of the electrode material as the temperature changes after the lithium-rich positive electrode material Li_{1.14}Ni_{0.136}Co_{0.136}Mn_{0.544}O₂ with a layered structure is charged to 4.8V and discharged to 2.0V for 100 times. It can be concluded from the figure that at a temperature between room temperature and 100°C, all of the lattice parameters a=b, and c increase as the temperature increases. This is due to the thermal expansion effect of material, and the result is similar to the change of the original material. As the temperature continuously increases, at a temperature between 100°C and 350°C, the lattice parameters a=b decrease as the temperature increases at 100-280°C. The lattice parameter c decreases as the temperature increases at 100-250°C.
   Figure 4 shows the change of the lattice parameters of the electrode material as the temperature changes after the lithium-rich positive electrode material Li_{1.14}Ni_{0.136}Co_{0.136}Mn_{0.544}O₂ with a layered structure is charged to 4.8V and discharged to 2.0V for 300 times. It can be concluded from the figure that at a temperature between room temperature and 100°C, all of the lattice parameters a=b, and c increase as the temperature increases. This is due to the thermal expansion effect of material, and the result is similar to the change of the original material. As the temperature continuously increases, at a temperature between 100°C and 350°C, the lattice parameters a=b decrease as the temperature increases at 100-300°C. The lattice parameter c decreases as the temperature increases at 100-300°C.
5) The obtained half-cell was subjected to cycle performance test using an electrochemical tester. The test temperature was 25°C, the charge cut-off voltage was 4.8V vs. Li⁺/Li⁰, and the discharge cut-off voltage was 2.0V vs. Li⁺/ Li⁰. After 1 cycle, the cell was taken apart in a glove box full of argon, treated at 200-300°C for 1-5h, and then assembled into a cell according to the method in above Step 3), and then the electrochemical performance test was conducted.

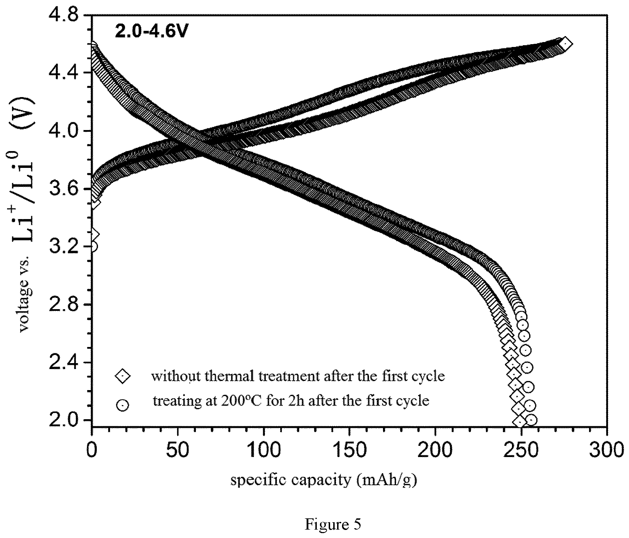

Figure 5: After a thermal treatment at 200°C for 2h, the above material was subjected to electrochemical test according to the method in Step 5) .Compared with the electrode material without thermal treatment, the material after treatment has higher voltage (3.65V vs. 3.57V) and discharge specific capacity (255mAh/g vs. 250mAh/g), thereby indicating that the material after treatment has lower defect density.

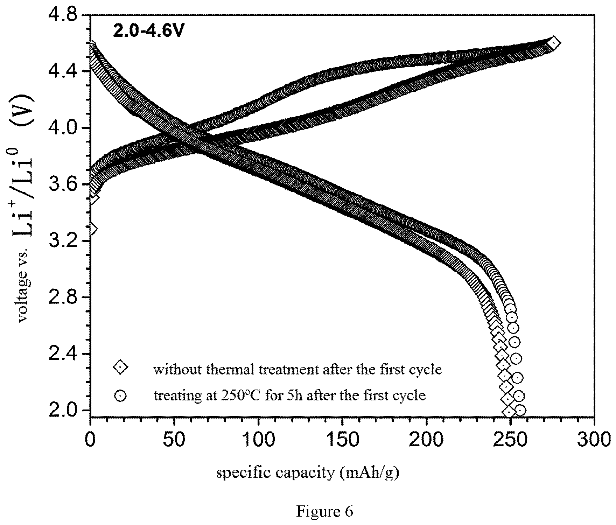

Figure 6: After a thermal treatment at 250°C for 5h, the above material was subjected to electrochemical test according to the method in Step 5). Compared with the electrode material without thermal treatment, the material after treatment has higher voltage (3.68V vs. 3.57V) and discharge specific capacity (256mAh/g vs. 250mAh/g), thereby indicating that the material after treatment has lower defect density.

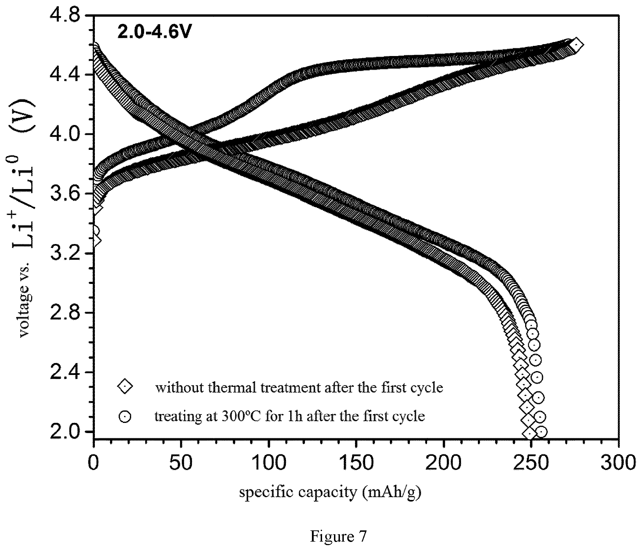

Figure 7: After a thermal treatment at 300°C for 1h, the above material was subjected to electrochemical test according to the method in Step 5). Compared with the electrode material without thermal treatment, the material after treatment has higher voltage (3.62V vs. 3.57V) and discharge specific capacity (256mAh/g vs. 250mAh/g), thereby indicating that the material after treatment has lower defect density.

### Examples 2-15

The lithium-rich positive electrode material Li_{1.14}Ni_{0.136}Co_{0.136}Mn_{0.544}O₂ with a layered structure of Example 1 was prepared according to the method of Example 1 with the other test conditions remaining unchanged expect only the technological parameters of the electrochemical treatment and/or thermal treatment. The specific technological parameters and the results were shown in Table 1.

**Table 1 Preparation technological parameters and performance test results of the lithium-rich positive electrode material with a layered structure**

| Example | Electrochemical treatment | | | Thermal treatment | | Temperature interval in which lattice parameters a, b and c decrease as the temperature increases /°C | Electrochemical performance | |
|---|---|---|---|---|---|---|---|---|
| | charge cut-off voltage /V | discharge cut-off voltage /V | Number of cycles | Temperature /°C | Time /h | | Voltage/ (voltage of the material after thermal treattnent vs. voltage of the material without thermal treatment), | Discharge specific capacity/ (discharge specific capacity of the material after thermal treatment vs. discharge specific capacity of the material without thermal treatment) |
| 2 | 4.6 | 2.0 | 1 | - | - | 100-250 | - | - |
| 3 | 4.6 | 2.0 | 100 | - | - | 100-290 | - | - |
| 4 | 4.6 | 2.0 | 300 | - | - | 100-315 | - | - |
| 5 | 4.6 | 2.0 | 1 | 200 | 2 | - | 3.65V vs. 3.57V | 254mAh/g vs. 250mAh/g |
| 6 | 4.6 | 2.0 | 100 | 200 | 2 | - | 3.55V vs. 3.21V | 250mAh/g vs. 235mAh/g |
| 7 | 4.6 | 2.0 | 300 | 200 | 2 | - | 3.52V vs. 3.1V | 244mAh/g vs. 230mAh/g |
| 8 | 4.6 | 2.0 | 1 | 250 | 5 | - | 3.66V vs. 3.57V | 256mAh/g vs. 250mAh/g |
| 9 | 4.6 | 2.0 | 100 | 250 | 5 | - | 3.59V vs. 3.21V | 252mAh/g vs. 235mAh/g |
| 10 | 4.6 | 2.0 | 300 | 250 | 5 | - | 3.55V vs. 3.1V | 246mAh/g vs. 230mAh/g |
| 11 | 4.6 | 2.0 | 1 | 300 | 1 | - | 3.66V vs. 3.57V | 256mAh/g vs. 250mAh/g |
| 12 | 4.6 | 2.0 | 100 | 300 | 1 | - | 3.61V vs. 3.21V | 255mAh/g vs. 235mAh/g |
| 13 | 4.6 | 2.0 | 300 | 300 | 1 | - | 3.58V vs. 3.1V | 249mAh/g vs.230mAh/g |
| 14 | 4.8 | 3.2 | 1 | - | - | 100-325 | - | - |
| 15 | 4.8 | 3.2 | 1 | 300 | 1 | - | 3.60V vs. 3.55V | 250mAh/g vs. 245mAh/g |

In Table 1, taking the data of Example 5 as an example, the voltage was "3.65V vs. 3.57V", wherein 3.65V was the voltage of the material prepared by the method of Example 5 in Table 1; and 3.57V was the voltage of a material with only electrochemical treatment and without thermal treatment based on the preparation method of Example 5. The discharge specific capacity was "254mAh/g vs. 250mAh/g", wherein 254mAh/g was the discharge specific capacity of the material prepared by the method of Example 5 in Table 1; and 250mAh/g was the discharge specific capacity of a material with only electrochemical treatment and without thermal treatment based on the method of Example 5. Other examples and Table 2 and Table 3 are in the same way.

### Example 16

1) Manganese (III) oxide, titanium dioxide and lithium carbonate were mixed at a molar ratio of lithium element, titanium element and manganese element = 3: 1: 1, ball-milled with a high energy ball-milling at the speed of 400r/min for 10h, to give the precursor. The precursor was thermally treated at a temperature of 900°C in gas atmosphere of Ar gas or N₂ gas for 24h, cooled to room temperature, and milled to give lithium-rich positive electrode material Li_{1.2}Mn_{0.4}Ti_{0.4}O₂.
2) The above lithium-rich positive electrode material with a spinel or rock salt structure was subjected to electrochemical treatment. The specific treatment was: 8g the above lithium-rich positive electrode with a spinel or rock salt structure, 1g acetylene black, 1g polyvinylidene fluoride and 30g N-methyl pyrrolidone were mixed at normal temperature and normal pressure to form slurry, and the slurry was evenly coated on the aluminum foil to give the pole piece. The obtained pole piece was dried at 80°C and pressed tightly. The pole piece was cut into 1.32cm² round slices as the positive electrode, and metal lithium slice was used as the negative electrode. 1mol/L LiPF₆ ethylene carbonate (EC) and dimethyl carbonate (DMC) solution was used as the electrolyte solution, wherenin the volume ratio of EC and DMC was 1: 1. In a glove box full of argon, a button cell was assembled. The obtained half-cell was subjected to cycle performance test with an electrochemical tester. The test temperature was 25°C, the charge cut-off voltage was 4.8V vs. Li⁺/Li⁰, and the discharge cut-off voltage was 2.0V vs. Li⁺/ Li⁰. 1-100 cycles were carried out.
3) The lithium-rich positive electrode material with a spinel or rock salt structure was subjected to X-ray diffraction analysis at different temperatures using an X-ray diffractometer of German Bruker Corporation or a synchrotron light source. The test conditions were: light source: Cu-Ka ray, Cu target, tube pressure: 40V, tube current: 40mA, scanning speed: 2°/min, 2θ scan range: 15-90°, step length: 0.02°, divergence slit (DS): 1mm, anti-scatter slit (SS): 8mm, and graphite monochromator; or synchrotron radiation source, and the temperature range of test: 20°C-400°C.

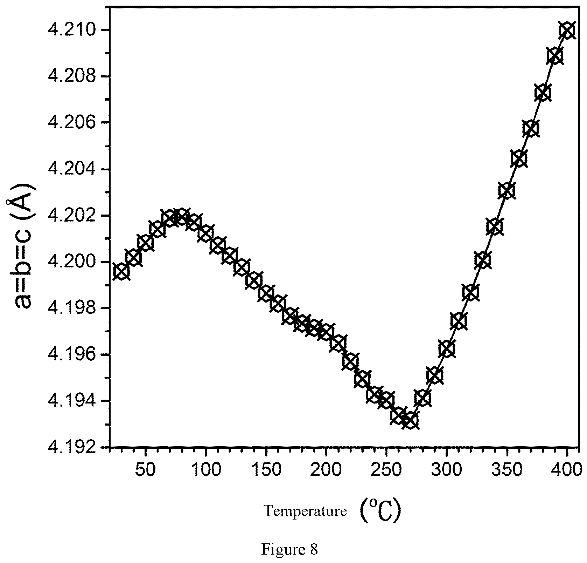

Figure 8 shows the change of the lattice parameters of the electrode material as the temperature changes after the lithium-rich positive electrode material Li_{1.2}Mn_{0.4}Ti_{0.4}O₂ with a spinel/rock salt structure is charged to 4.8V and discharged to 2.0V once. It can be concluded from the figure that at a temperature between room temperature and 100°C, all the lattice parameters a=b=c increase as the temperature increases. This is due to the thermal expansion effect of material, and the result is similar to the change of the original material. As the temperature continuously increases, in the temperature interval of 50°C to 350°C, the lattice parameters a=b=c decrease as the temperature increases at 70-270°C.

### Examples 17-22

The lithium-rich positive electrode material Li_{1.2}Mn_{0.4}Ti_{0.4}O₂ prepared with a spinel/rock salt structure of Example 16 was prepared according to the method of Example 16 with the other test conditions remaining changed except only the technological parameters of electrochemical treatment and/or thermal treatment. The specific technological parameters and the results were shown in Table 2.

**Table 2 Preparation technological parameters and electrochemical performance of the lithium-rich positive electrode material with a spinel/rock salt structure**

| Example | Electrochemical treatment | | | Thermal treatments | | Temperature interval in which lattice parameters a, b and c decrease as the temperature increases /°C | Electrochemical performance | |
|---|---|---|---|---|---|---|---|---|
| | Charge cut-off voltage /V | Discharge cut-off voltage /V | Number of cycles | Temperature /°C | Time /h | | Voltage/(voltage of the material after thermal treatment vs. voltage of the material without thermal treatment) | Discharge specific capacity/ (discharge specific capacity of the material after thermal treatment vs. discharge specific capacity of the material without thermal treatment) |
| 17 | 4.8 | 2.0 | 1 | - | - | 100-270 | - | - |
| 18 | 4.8 | 2.0 | 100 | - | - | 100-300 | - | - |
| 19 | 4.8 | 2.0 | 300 | - | - | 100-330 | - | - |
| 20 | 4.8 | 2.0 | 1 | 300 | 1 | - | 3.50V vs. 3.40V | 258mAh/g vs. 250mAh/g |
| 21 | 4.8 | 2.0 | 100 | 300 | 1 | - | 3.48V vs. 3.15V | 256mAh/g vs. 235mAh/g |
| 22 | 4.8 | 2.0 | 300 | 300 | 1 | - | 3.58V vs. 2.9V | 245mAh/g vs. 230mAh/g |

### Example 23

1) Ruthenium oxide, titanium oxide and lithium carbonate were mixed at a molar ratio of lithium element, ruthenium element and titanium element = 4: 1: 1, milled with a high energy ball-milling at a speed of 600r/min for 10h, to give a precursor. The precursor was thermally treated at a temperature of 1050°C and in an air atmosphere for 24h, cooled to room temperature and milled to give a lithium-rich positive electrode material Li₂Ru_{0.5}Ti_{0.5}O₃.
2) The above lithium-rich positive electrode material with a monoclinic layered structure was subjected to electrochemical treatment. The specific treatment was: 8g the above lithium-rich positive electrode with a monoclinic layered structure, 1g acetylene black, 1g polyvinylidene fluoride and 30g N-methyl pyrrolidone were mixed at normal temperature and normal pressure to form slurry, and the slurry was evenly coated on the aluminum foil to give the pole piece. The obtained pole piece was dried at 80°C and pressed tightly. The pole piece was cut into 1.32cm² round slices as the positive electrode, and metal lithium slice was used as the negative electrode. 1mol/L LiPF₆ ethylene carbonate (EC) and dimethyl carbonate (DMC) solution was used as the electrolyte solution, wherein the volume ratio of EC and DMC was 1:1. In a glove box full of argon, a button cell was assembled. The obtained half-cell was subjected to cycle performance test with an electrochemical tester. The test temperature was 25°C, the charge cut-off voltage was 4.8V vs. Li⁺/Li⁰, and the discharge cut-off voltage was 2.0V vs. Li⁺/ Li⁰. 1-100 cycles were carried out.
3) The lithium-rich positive electrode material with a monoclinic layered structure was subjected to X-ray diffraction analysis at different temperatures using an X-ray diffractometer of German Bruker Corporation or a synchrotron light source. The test conditions were: light source: Cu-Ka ray, Cu target, tube pressure: 40V, tube current: 40mA, scanning speed: 2°/min, 2θ scan range: 15-90°, step length: 0.02°, divergence slit (DS): 1mm, anti-scatter slit (SS): 8mm, and graphite monochromator; or synchrotron radiation source, and the temperature range of test: 20°C-400°C.

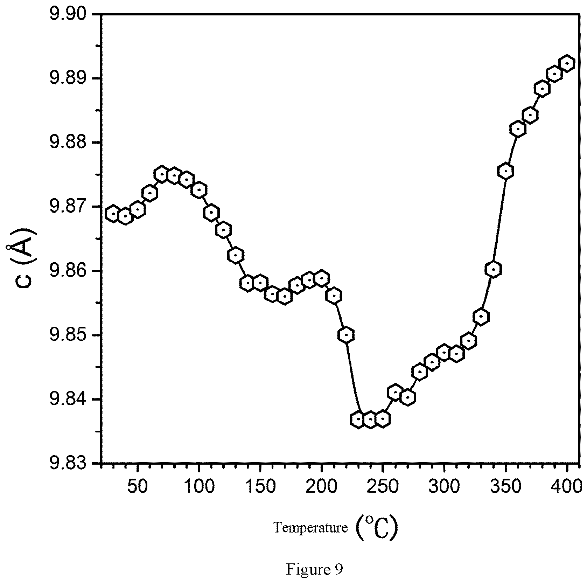

Figure 9 shows the change of the lattice parameters as the temperature changes after the lithium-rich positive electrode material Li₂Ru_{0.5}Ti_{0.5}O₃ with a monoclinic layered structure is charged to 4.6V and discharged to 2.0V once. It can be concluded from the figure that at a temperature between room temperature and 100°C, the lattice parameters a, b and c increase as the temperature increases. This is due to the thermal expansion effect of material, and the result is similar to the change of the original material. As the temperature continuously increases, in the temperature interval of 50°C to 350°C, the lattice parameter c decreases as the temperature increases at 70-170°C and 200-240°C.

### Examples 24-29

The lithium-rich positive electrode material Li₂Ru_{0.5}Ti_{0.5}O₃ with a monoclinic layered structure prepared in Example 23 was prepared according to the method of Example 23 with the other test conditions remaining unchanged expect only the technological parameters of the electrochemical treatment and/or thermal treatment. The specific technological parameters and the results were shown in Table 3.

**Table 3 Preparation technological parameters and performance test results of the lithium-rich positive electrode material with a monoclinic layered structure**

| Example | Electrochemical treatment | | | Thermal treatment | | Temperature interval in which lattice parameters a, b and c decrease as the temperature increases /°C | Electrochemical performance | |
|---|---|---|---|---|---|---|---|---|
| | charge cut-off voltage /V | discharge cut-off voltage/V | Number of cycles | Temperature /°C | Time /h | | Voltage/ (voltage of the material after thermal treatment vs. voltage of the material without thermal treatment) | Discharge specific capacity/ (discharge specific capacity of the material after thermal treatment vs. discharge specific capacity of the material without thermal treatment) |
| 24 | 4.6 | 2.0 | 1 | - | - | 100-250 | - | - |
| 25 | 4.6 | 2.0 | 100 | - | - | 100-275 | - | - |
| 26 | 4.6 | 2.0 | 300 | - | - | 100-300 | - | - |
| 27 | 4.6 | 2.0 | 1 | 300 | 1 | - | 3.47V vs. 3.45V | 265mAh/g vs. 255mAh/g |
| 28 | 4.6 | 2.0 | 100 | 300 | 1 | - | 3.45V vs. 3.25V | 260mAh/g vs. 245mAh/g |
| 29 | 4.6 | 2.0 | 300 | 300 | 1 | - | 3.42V vs. 3.0V | 245mAh/g vs. 230mAh/g |

The above descriptions are only preferred embodiments of the present disclosure. It should be noted that a number of modifications and refinements may be made by one of ordinary skills in the art without departing from the principles of the disclosure, and such modifications and refinements are also considered to be within the scope of protection of the disclosure.

## Claims

1. A lithium-rich oxide positive electrode material, wherein when the material is subjected to X-ray diffraction analysis at a temperature between 50°C and 350°C, at least one lattice parameter (a, b, c) decreases as the temperature increases.

2. The lithium-rich oxide positive electrode material according to claim 1, wherein the lithium-rich oxide positive material has a general formula of Li₁₊ₓNi_{y}Co_{z}MnᵤM_{d}O₂, wherein 0<x≤0.2; 0≤y≤0.35; 0≤z≤0.35; 0.5≤u≤0.9; 0≤d≤0.5; and M is one or more selected from nickel, cobalt, manganese, iron, aluminum, vanadium, titanium, zirconium, tin, niobium, molybdenum, ruthenium and the like.

3. The lithium-rich oxide positive electrode material according to claim 1, wherein the lithium-rich oxide has a crystal structure selected from layered structure, spinel structure, molten salt structure and monoclinic layered structure.

4. A method for preparing the lithium-rich oxide positive electrode material according to any one of claims 1-3, comprising charging the material at electric potential of 4.5-4.8V vs. Li⁰, and discharging to 2.0-4.4V to conduct an electrochemical treatment.

5. The method according to claim 4, wherein the current density in the electrochemical treatment is 25-250 mA/g.

6. The method according to claim 4, wherein the lithium-rich oxide positive material has a general formula of Li₁₊ₓNi_{y}Co_{z}MnᵤM_{d}O₂, wherein 0<x≤0.2; 0≤y≤0.35; 0≤z≤0.35; 0.5≤u≤0.9; 0≤d≤0.5; M is one or more selected from nickel, cobalt and manganese, and the crystal structure is layered structure;
wherein the method of electrochemical treatment is:
charging the lithium-rich oxide positive electrode material with a layered structure at electrical potential of 4.6-4.8V vs. Li⁰, and discharging to 2.0-3.2V; the cycle number of the electrochemical treatment is 1-300 times.

7. The method according to claim 4, wherein the lithium-rich oxide positive material has a general formula of Li₁₊ₓNi_{y}Co_{z}MnᵤM_{d}O₂, wherein 0<x≤0.2; 0≤y≤0.35; 0≤z≤0.35; 0.5≤u≤0.9; 0≤d≤0.5; M is one or more selected from iron, aluminum, vanadium, titanium, zirconium, niobium and molybdenum, and the crystal structure is spinel structure or molten salt structure;
wherein the method of electrochemical treatment is:
charging the lithium-rich oxide positive electrode material with a spinel structure or molten salt structure at electrical potential of 4.6-4.8V vs. Li⁰, and discharging to 2.0-3.0V; the cycle number of the electrochemical treatment is 1-300 times.

8. The method according to claim 4, wherein the lithium-rich oxide positive material has a general formula of Li₁₊ₓNi_{y}Co_{z}MnᵤM_{d}O₂, wherein 0<x≤0.2; 0≤y≤0.35; 0≤z≤0.35; 0.5≤u≤0.9; 0≤d≤0.5; M is one or more selected from titanium, zirconium, tin and ruthenium, and the crystal structure is monoclinic layered structure;
wherein the method of electrochemical treatment is:
charging the lithium-rich oxide positive electrode material with a monoclinic layered structure at electrical potential of 4.6-4.8V vs. Li⁰, and discharging to 2.0-4.4V; the cycle number of the electrochemical treatment is 1-300 times.

9. The method according to claim 4, wherein after subjecting the lithium-rich oxide positive electrode material to electrochemical treatment, the method further comprises conducting a thermal treatment;
wherein the method of thermal treatment is:
conducting the treatment under conditions of 150-350 °C for 0.5-10 h.

10. A lithium-ion battery, comprising a positive electrode, a negative electrode, a membrane and an electrolyte solution, wherein the positive electrode is made of the lithium-rich oxide positive electrode material according to any one of claims 1-3, or the lithium-rich oxide positive electrode material prepared by the method according to any one of claims 4-9.
